# EUROPÄISCHE PATENTSCHRIFT

(11) **EP 1 695 029 B1**
(45) Veröffentlichungstag und Bekanntmachung des Hinweises auf die Patenterteilung: **17.08.2011**
(21) Anmeldenummer: 04803704.8
(22) Anmeldetag: 07.12.2004
(51) Int. Cl.: G01C 11/00

(54) **VERFAHREN UND VORRICHTUNG ZUR MINDESTENS TEILWEISE AUTOMATISIERTEN AUSWERTUNG VON FERNERKUNDUNGSDATEN**
METHOD AND DEVICE FOR THE AT LEAST SEMI-AUTOMATED EVALUATION OF REMOTE SENSING DATA
PROCEDE ET DISPOSITIF POUR EVALUER DE MANIERE PARTIELLEMENT AUTOMATISEE DES DONNEES DE DETECTION A DISTANCE

(30) Priorität: 15.12.2003 DE 10358938
(43) Veröffentlichungstag der Anmeldung: 30.08.2006
(73) Patentinhaber: Deutsches Zentrum für Luft- und Raumfahrt e.V., 53175 Bonn (DE)
(72) Erfinder: BORG, Erik, 16247 Joachimsthal (DE); GÜNTHER, Kurt, Paul, 82237 Wörthsee (DE); MAIER, Stefan, Walter, 81247 München (DE); FICHTELMANN, Bernd, 17235 Neustrelitz (DE)
(74) Vertreter: Patentanwälte Bressel und Partner
(86) Internationale Anmeldenummer: PCT/EP2004/014052
(87) Internationale Veröffentlichungsnummer: WO 2005/057129

(56) Entgegenhaltungen:
- DE-A1- 19 939 732
- P.A.TOWNSEND AND S.J.WALSH: "Remote sensing of forested wetlands..." PLANT ECOLOGY, Bd. 157, 2001, Seiten 129-149, XP002321681
- BACH H: "Yield estimation of corn based on multitemporal LANDSAT-TM data as input for an agrometeorological model" PURE AND APPLIED OPTICS IOP PUBLISHING UK, Bd. 7, Nr. 4, 1998, Seiten 809-825, XP002321682 ISSN: 0963-9659

## Beschreibung

Die Erfindung betrifft ein Verfahren und eine Vorrichtung zur mindestens teilweise automatisierten Auswertung von Fernerkundungsdaten, wobei Objekte anhand von Bildmerkmalen identifiziert und/oder klassifiziert werden. Als Bildmerkmale werden Merkmale bezeichnet, welche mit optischen Sensoren erfassbar sind. Bildmerkmale, die zur Identifikation und/oder Klassifikation genutzt werden können, sind beispielsweise der Grauton, die Farbe, die multispektrale Signatur, die Oberflächenstruktur (Textur), Umgebung und/oder die Form eines erfassten Objektes.

Es ist bekannt, Fernerkundungsdaten für eine Identifikation und/oder Klassifikation automatisch aufzubereiten. Bekannte Verfahren zur automatischen Atmosphärenkorrektur sind beispielsweise in den Programmen DurchBlick oder SMAC (Simplified Method for Atmosphere Correction) eingesetzt.

Auch eine Automatisierung der Identifikation und/oder Klassifikation von Fernerkundungsdaten gewinnt vor dem Hintergrund des sich immer besser gestaltenden Zugangs zu Fernerkundungsdaten und der zunehmend größer werdenden Datenbestände an Bedeutung.

Für eine Identifikation und/oder Klassifikation lassen sich zwei Vorgangsweisen unterscheiden. Gemäß einer ersten Vorgangsweise werden zu untersuchende Bilder anhand eines statistischen Regelprinzips oder mit Hilfe von Trainingsgebieten segmentiert und einzelne Segmente anschließend bestimmten Klassen und/oder Objekten zugeordnet. Gemäß einer zweiten Vorgehensweise werden die Bilder gezielt nach bestimmten Klassen und/oder Objekten durchsucht.

Beide Vorgehensweisen benötigen für eine automatische Identifikation und/oder Klassifikation im Vorfeld definierte Identifikationsparameter. Identifikationsparameter sind Kriterien im Merkmalsraum, nach denen die Unterscheidung vorgenommen werden kann, ob ein Bildpunkt einem Objekt zugeordnet wird oder nicht. Identifikationsparameter lassen sich aufgrund von Erfahrungswerten und/oder bekannten Objekteigenschaften definieren.

Für den Einsatz einer automatischen Identifikafiion und/oder Klassifikation von Objekten auf der Grundlage statischer, d.h. fest definierter Identifikationsparameter müssen jedoch auch die Randbedingungen mindestens näherungsweise konstant sein.

Da konstante Randbedingungen weder für eine einzelne Szene noch für eine ganze Zeitserie vorausgesetzt werden können, müssen starre Identifikationsparameter sehr weit ausgelegt werden, um weitgehend alle Aufnahmebedingungen berücksichtigen zu können. Damit sind auf der Grundlage starrer Identifikationskriterien die Möglichkeiten einer Automatisierung stark eingeschränkt.

Es sind weiter interaktive Programme bekannt, beispielsweise die Programme ENVI/RSI oder ERDAS/IMAGINE. Dabei werden die Identifikationsparameter durch eine Interaktion mit einem Nutzer an wechselnde Randbedingungen angepasst. Der Nutzer definiert durch die Bestimmung von Zurückweisungsradien oder durch die Auswahl von Testgebieten das Klassifikationsmodell. Das Klassifizierungsergebnis ist in der Regel stark subjektiv beeinflusst. Zudem ist diese Arbeit mit einem hohen manuellen Aufwand verbunden und der Nutzer muss vorab entsprechend geschult werden. Abgesehen von einem beträchtlichen Zeitaufwand ist eine solche Verarbeitungsstrategie nicht für die operationelle Verarbeitung großer Datenmengen geeignet.

Weiter sind (semi-) automatische Verfahren bekannt, beispielsweise ECOGNITION/DEFINIENS, mit deren Hilfe auch größere Datenmengen interpretiert werden können. Das Programm wird durch Optimierung verschiedener Interpretationsparameter für ein vorgegebenes Gebiet trainiert. Durch den damit verbundenen Verzicht auf manuell zu steuernde Parameter während der unmittelbaren Klassifikation liefert dieses Programmpaket nachvollziehbare objektivierte Ergebnisse und ist zur Einbindung in automatische Prozessketten geeignet. Einschränkend für den Einsatz dieser Software in automatischen Prozessketten wirkt sich jedoch die Tatsache aus, dass sie zwar auf hoch entwickelten bildwissenschaftlichen Algorithmen beruht, aber im wesentlichen keine physikalischen und biologischen Ansätze unterstützt. Dadurch sind a priori bekannte Informationen über Randbedingungen nicht in der Optimierung berücksichtigbar. Ein definiertes Klassifikationsmodell ist ohne zusätzliche Optimierung nur für einen eingeschränkten Zeitraum einsetzbar, in welchem die Randbedingungen unverändert bleiben.

Weiter sind Verfahren zur Identifikation und/oder Klassifikation unter Verwendung neuronaler Netze bekannt. Ähnlich dem Verfahren mittels Optimierung müssen auch neuronale Netze aufwendig trainiert werden. Dazu werden Fernerkundungssignaturen bekannter Landschaftsobjekte genutzt, um ein Klassifizierungsmodell zu entwickeln. Es hat sich jedoch gezeigt, dass neuronale Netze fehlerbehaftete Ergebnisse liefern können, wenn sie nicht hinreichend und/oder falsch trainiert wurden. Außerdem lassen sich neuronale Netze nicht verallgemeinern, d.h. ein neuronales Netz ist nur für den Wertebereich der Trainingsdaten gültig.

DE 101 60 179 A1 beschreibt ein Verfahren zur Fernerkundung morphologisch und strukturell komplexer Objekte in einem Objektraum, das die Schritte umfasst: a) Erfassen von Topometriedaten und -informationen in dem Objektraum, b) Auswerten der Topometriedaten und -informationen und c) Wiedergeben der ausgewerteten Topometriedaten und -informationen als maschinenlesbare oder sensitiv wahrnehmbarer Datensätze. Bei der Durchführung von Analysen von Datensätzen, die untersucht werden sollen, können Referenzdatensätze zur Überprüfung der Resultate erzeugt werden. Ferner können Analysen nach Methoden der Objekt-, Musterund Formerkennung durchgeführt werden. Bei der Weiterverwendung der erzeugten Resultate der Analysen kann eine Klassifikation der untersuchten Objekte anhand der Resultate der Analysen unter den jeweiligen fachspezifischen Gesichtspunkten stattfinden.

Die Veröffentlichung "Interpreting ERS SAR Signatures of Agricultural Crops in Flevoland, 1993 - 1996, von Paul Saich und Maurice Borgeaud, IEEE Transactions on Geoscience and Remote Sensing, Vol. 38, No. 2, März 2000, Seiten 651 - 657, beschreibt die Interpretation von Radar-Signaturen von landwirtschaftlichen Bepflanzungen. Es wurden Anzeichen dafür gefunden, dass Regen, Temperatur und Einfallswinkel multitemporale Radar-Signaturen stören. Die Ableitung direkter physikalischer Zusammenhänge zwischen den Radar-Signaturen und den Eigenschaften der Vegetation und des Bodens erfordern Korrekturen dieser Effekte. Es konnten jedoch keine entsprechenden Korrekturen durchgeführt werden.

P.A. Townsend and S.J.Walsh: Remote sensing of forested wethlands ..." Plant Ecology, Bd. 157, 2001, Seiten 129-149, XP002321681 beschreibt die Klassifikation von multitemporalen und multispektralen digitalen Satellitendaten. Es wurde ein hierarchisches Klassifikationsschema entwickelt. Fuzzy-Sätze werden dazu eingesetzt, die Genauigkeit der Zuordnung zu überprüfen.

DE 199 39 732 A1 beschreibt ein Verfahren zur automatischen Detektion und Identifikation von Objekten in multispektralen Fernerkundungsdaten. Fuzzies werden zur Gewinnung von Trainingsgebieten verwendet.

Der Erfindung liegt daher das technische Problem zugrunde, ein Verfahren und eine Vorrichtung zu schaffen, durch die Objekte bei wechselnden Randbedingungen zuverlässiger identifizier- und/oder klassifizenbar sind.

Die beigefügten Patentansprüche definieren den Schutzumfang.

Es werden Identifikationsparameter für eine mindestens teilweise automatisierten Auswertung von Fernerkundungsdaten, wobei Objekte anhand von Bildmerkmalen identifiziert und/oder klassifiziert werden, multitemporal bestimmt. Die Fernerkundungsdaten liegen als multispektrale Fernerkundungsdatenzeitreihe vor. Durch die zeitabhängige Bestimmung der Identifikationsparameter werden tageszeitbedingte und/oder jahreszeitbedingte Effekte berücksichtigbar. Tageszeitbedingte Effekte sind beispielsweise Schatten, Reflektionseigenschaften von Objekten aufgrund des Sonnenstands, etc. Jahreszeitbedingte Effekte sind beispielsweise Verfärbungen der Blätter von Laubbäumen und/oder die mit der Jahreszeit wechselnde Bepflanzung eines Ackerbodens. Identifikationsparameter können für bestimmte Verhältnisse optimiert werden. Die Anpassung an temporale Effekte kann automatisiert ohne Interaktion durch einen Nutzer erfolgen.

In einer weiteren Ausführungsform werden Daten zeitlich-räumlich rekonstruiert. Für die zeitlich-räumliche Datenrekonstruktion werden durch temporäre Störungen kontaminierte Pixel identifiziert und durch Interpolationsverfahren nach Möglichkeit ersetzt. Pixel einer Zeitreihe sind beispielsweise wolken-, dunst- und/oder temporär schneekontaminiert. Die Interpolation erfolgt vorzugsweise über Zeitreihenanalyse und geostatistische Verfahren. D.h. die Interpolation erfolgt sowohl zeitlich über aufeinander folgende Daten der Fernerkundungsdatenzeitreihe als auch räumlich über benachbarte Pixel. Dabei werden sich ändernde temporale Effekte nach Möglichkeit berücksichtigt.

In einer weiteren Ausführungsform werden Identifikationsparameter mindestens in Abhängigkeit von spektralen Signaturen und einer temporalen Landnutzungscharakteristik bestimmt. Der temporale Verlauf der Landnutzungscharakteristik ist beispielsweise eine Phänologie von Vegetation.

In einer weiteren bevorzugten Ausführungsform werden Identifikationsparameter iterativ reklassifiziert, wobei mindestens die temporale Abhängigkeit von Landnutzungscharakteristiken reklassifiziert wird. Durch die iterative Reklassifikation über den zeitlichen Verlauf der Landnutzungscharakteristiken sind die Klassifikationsergebnisse weiter verbesserbar.

In einer weiteren bevorzugten Ausführungsform wird ein jahreszeitlicher Verlauf in einer Datenzeitreihe dokumentiert und Landnutzungscharakteristiken werden an den erfassten jahreszeitlichen Verlauf adaptiert.

In einer weiteren bevorzugten Ausführungsform werden jahreszeitlich bedingte Änderungen der Landnutzungscharakteristiken prognostiziert.

In einer weiteren bevorzugten Ausführungsform erfolgt die Identifikation und/oder Klassifikation eines Objekts auf der Basis dreidimensionaler Fuzzy-Funktionen. Dabei ist es denkbar, dass geeignete Korrelationsverfahren bei Vorhandensein einer ausreichenden Anzahl jahreszeitlich verteilter Stützstellen zur Anwendung kommen. Eine derartige Kombination ermöglicht eine automatische Bestimmung der Landschaftscharakteristiken ohne interaktive Eingriffe und/oder Expertenwissen. Das vollautomatische Verfahren ist universell für Fernerkundungsdatenzeitreihen einsetzbar. Alle für die Klassifikation notwendigen Informationen werden aus den Satellitenbildern selbst gewonnen.

Das Folgende betrifft insbesondere die Identifizierung und/oder Klassifizierung eines durch Fernerkundung erfassten, aber nicht bekannten Objekts (oder mehrerer Objekte). Bei einer idealen Auswertung der Strahlungseigenschaften (insbesondere des Reflexionsverhaltens) werden die vorliegenden Messwerte über den gesamten Spektralbereich mit den Strahlungs-Spektren möglicher verschiedener Objekt-Typen oder Objekt-Klassen verglichen. Auf Grund des Vergleichs kann das Objekt dem Objekt-Typ oder der Objekt-Klasse zugeordnet werden. In der Praxis liegen jedoch in der Regel nur Messwerte in einer endlichen Anzahl von Spektralbereichen unerschiedlicher Breite vor. Daher wird die Zuordnung erschwert.

Insbesondere wird daher zumindest eine spektrale Signatur eines Objekts (vorzugsweise wird eine Mehrzahl von spektralen Signaturen des Objekts) z. B. in verschiedenen geeigneten Spektralbereichen ausgewertet, wobei jede der spektralen Signaturen Strahlungseigenschaften des Objekts beschreibt. Bei einer Auswertung der einzelnen spektralen Signaturen wird vorgeschlagen, jeweils Fuzzies (auch Wahrscheinlichkeits-Funktionen genannt) zu verwenden. Über diese Fuzzies kann aus den Werten der Strahlungseigenschaften oder Werten einer daraus abgeleiteten Größe (z. B. für jeden der möglichen Objekt-Typen) jeweils ein Zuordnungsmaß abgeleitet werden. Diese abgeleiteten Zuordnungsmaße aus den verschiedenen Spektralbereichen eines jeden Objekt-Typs können anschließend in geeigneter Weise (z.B. Addition, Multiplikation) miteinander zu einer Gesamtzuordnungsmaß verknüpft werden. Z. B. durch den Vergleich der Gesamtzuordnungsmaße für alle Objekt-Typen kann das erfaßte Objekt einem bestimmten Objekt-Typ oder einer Objektklasse zugeordnet werden.

Zusätzlich können die spektralen Signaturen die Strahlungseigenschaften der Objekte einer Klasse oder eines Typs jeweils zu einem definierten Zeitpunkt oder Zeitraum beschreiben. Dadurch wird die Unterscheidung von anderen Objekt-Typen zusätzlich durch die Zuordnung eines Objekt-Typs zu einem definierten Zeitpunkt (z. B. einem Vegetations-Zeitpunkt) ermöglicht. Darüber hinaus können spektrale Signaturen, die die Strahlungseigenschaften eines Objekts zu verschiedenen Zeitpunkten und/oder in verschiedenen Zeiträumen beschreiben, ausgewertet werden und es kann auf diese Weise die Zuverlässigkeit der Zuordnung des Objekts erhöht werden.

Auf bevorzugte Details im Zusammenhang mit den Fuzzies wird noch eingegangen. Dabei werden die Bewertungsmaße als Wahrscheinlichkeiten dafür bezeichnet, dass das ausgewertete Objekt einem erwarteten, durch die Fuzzies definierten Objekt-Typ entspricht.

Insbesondere können die Fuzzies spezielle Wahrscheinlichkeitsfunktionen sein, die ein Maximum des Bewertungsmaßes aufweisen, das sich über einen Bereich von Werten einer Strahlungseigenschaft des Objekts erstreckt. Um verschiedenste Randbedingungen zu berücksichtigen, liegt das Maximum nicht nur bei einem einzigen Wert der Strahlungseigenschaft vor. Insbesondere kann das Maximum, wenn eine bestimmte Stelle im Spektrum betrachtet wird, sich über einen Bereich der Werte erstrecken. Alternativ oder zusätzlich können die Fuzzies spezielle Wahrscheinlichkeitsfunktionen in dem Sinn sein, dass die Wahrscheinlichkeit von einem Maximum nicht sprungartig, sondern stetig oder in einem anderweitig ermittelten funktionalen Verlauf über einen Bereich von Werten der Strahlungseigenschaft auf ein niedrigeres Wahrscheinlichkeits-Niveau, insbesondere auf Null, abnimmt.

Eine solche "unscharfe" Zuordnung des Bewertungsmaßes bzw. der Wahrscheinlichkeit erlaubt es einerseits, Objekte mit ähnlichen, aber unterscheidbaren Eigenschaften als Angehörige desselben Objekt-Typs mit einer bestimmten Wahrscheinlichkeit zu identifizieren. Verschiedene Objekte eines bestimmten Typs oder Klasse können aber andererseits in den untersuchten Spektralbereichen sehr ähnliche Eigenschaften aufweisen oder Auswirkung der verschiedenen Randbedingungen auf das Messsignal in diesen Spektralbereichen können dazu führen, dass eine Zuordnung nur zu zwei oder mehreren Objekt-Typen gleichzeitig ermöglicht wird. Zur weiteren Erhöhung der Zuordnungswahrscheinlichkeit zu einem Objekt-Typ sind gegebenenfalls weitere Verfahren oder differenzierbare spektrale Informationen notwendig.

Die Erfindung wird nachfolgend anhand eines bevorzugten Ausführungsbeispiels näher erläutert. Die Figuren zeigen:
- Fig. 1: eine schematische Darstellung einer multitemporalen (z.B. saisonalen) spektralen Signatur eines Landschaftsobjekts,
- Fig. 2a: eine schematische Darstellung der spektralen Signatur eines Objekt- Typs, die beispielsweise aber nur in den spektralen Bereichen A, B und C ermittelt werden kann,
- Fig. 2b: eine schematische Darstellung einer Nachbildung der spektralen Signatur aus Fig. 2a auf der Wellenlänge A durch ein Fuzzy,
- Fig. 2c: eine schematische Darstellung einer Nachbildung der spektralen Signatur aus Fig. 2a auf der Wellenlänge B durch ein Fuzzy,
- Fig. 2d: eine schematische Darstellung einer Nachbildung der spektralen Signatur aus Fig. 2a auf der Wellenlänge C durch ein Fuzzy,
- Fig. 3: eine schematische Darstellung eines phänologischen Verlaufs eines Weizenfeldes und dazugehörige Übergangswahrscheinlichkeiten zwischen verschiedenen Entwicklungs - und Bearbeitungsstufen und
- Fig. 4: eine schematische Darstellung eines Klassifizierungsprozessors.

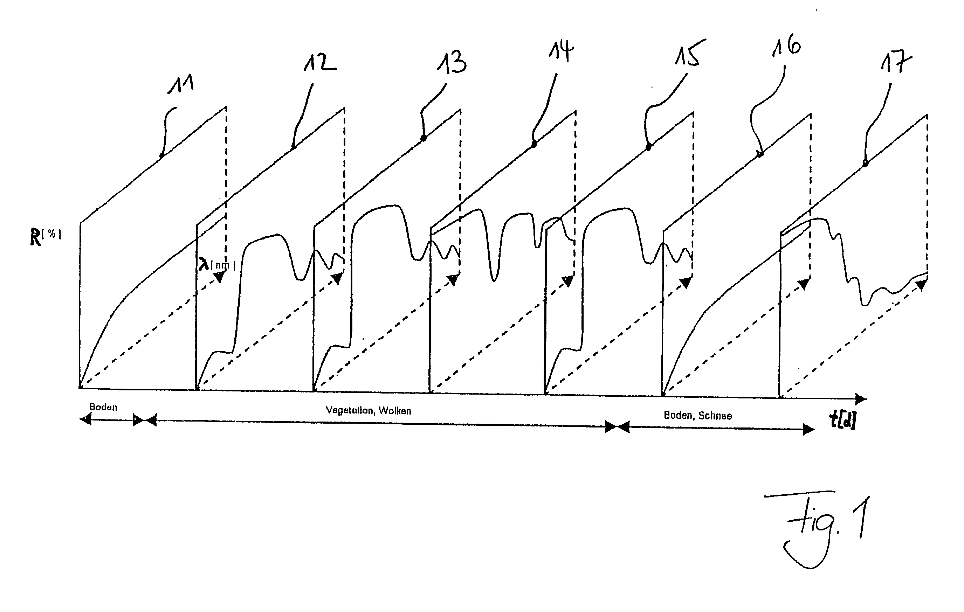

Fig. 1 zeigt schematisch spektrale Signaturen 11 - 17 eines Landschaftsobjektes über einen Verlauf eines Jahres. Landschaftsobjekte sind beispielsweise Ackerböden, Wälder, Wiesen, Wüsten, Seen, etc. Landschaftsobjekte weisen bestimmte Bildmerkmale auf, die zur Identifikation und/oder Klassifikation genutzt werden können. Hierzu gehören beispielsweise der Grauton, die Farbe, die spektrale Signatur, die Oberflächenstruktur (Textur) und/oder die Form eines erfassten Objektes. Die spektralen Signaturen 11 -17 zeigen die Intensität R in Prozent über der Wellenlänge λ. Spektrale Signaturen und/oder andere Bildmerkmale sind im Allgemeinen nicht zeitinvariant, sondern ändern sich über den Tages- und/oder den Jahresverlauf. Erfindungsgemäß werden zur Berücksichtigung der Zeitabhängigkeit multitemporale Identifikationsparameter gebildet. Die Identifikationsparameter werden vorzugsweise als Fuzzy-Set abgebildet. Vorzugsweise wird zumindest ein Fuzzy-Set (hierauf wird noch näher eingegangen) als Identifikationsparameter verwendet.

Die Erfindung ist jedoch nicht auf die in den Figuren gezeigte Art von spektralen Signaturen beschränkt. Vielmehr wird unter einer spektralen Signatur zumindest eine physikalische Messgröße oder daraus abgeleitete Größe verstanden, die die von dem beobachteten Objekt und/oder einer beobachteten Szene empfangene Strahlung als Funktion der Wellenlänge, als Funktion der Strahlungsfrequenz und/oder als Funktion einer äquivalenten Größe beschreibt. In dem Beispiel ist die physikalische Größe die Intensität R, z. B. der effektive Reflexionsgrad der Szene.

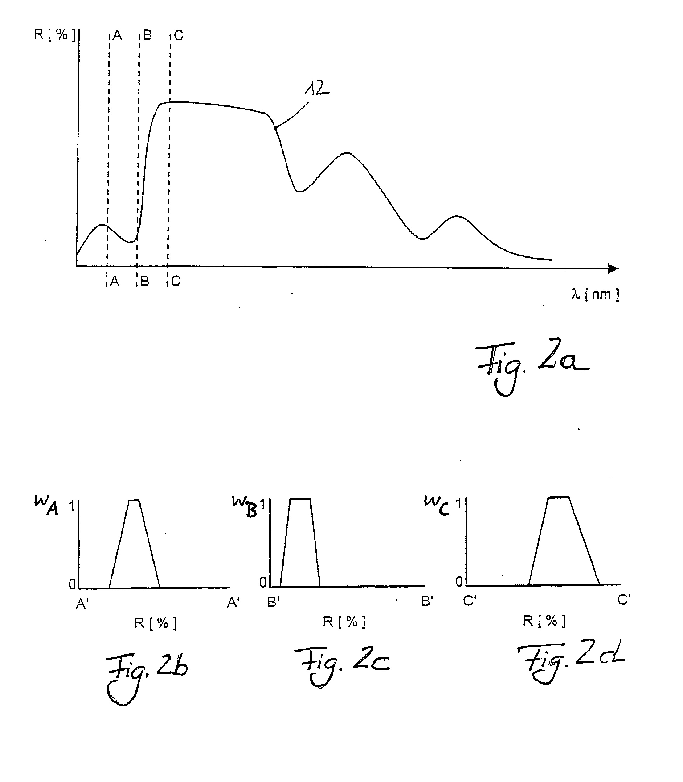

Fig. 2a zeigt schematisch die spektrale Signatur 12 aus Fig. 1. Die Fig. 2b-2d zeigen Nachbildungen der spektralen Signatur 12 durch Fuzzies für die Wellenlängen A, B und C.

Die einzelnen Fuzzies sind insbesondere Wahrscheinlichkeitsfunktionen, die Werten (hier: Intensitäten) der spektralen Signatur (bzw. im Allgemeinen Werten des oben genannten Bildmerkmals, das zur Identifikation und/oder Klassifikation genutzt werden kann) jeweils einen Wahrscheinlichkeits-Wert zuordnen. Die Zuordnung erfolgt insbesondere zu einem von verschiedenen Objekt-Typen, d.h. ein einzelner Fuzzy ist in Bezug auf einen bestimmten Objekt-Typ definiert. Dabei können die Fuzzies für einen Wertebereich (hier: die in Fig. 2b bis Fig. 2d dargestellten Bereiche der Intensitäten, z. B. Reflexionsgrad von 0 bis 100 %) des Bildmerkmals eines Objekt-Typs definiert sein. Für jeden weiteren Objekt-Typ ist so ein Fuzzy-Set analog zu 2b) bis 2d) zur Auswertung heranzuziehen.

Die Fuzzies können dazu verwendet werden, jeweils ein Bildelement (das einem bestimmten örtlichen Punkt oder Bereich der beobachteten Szene entspricht) zu einem (saisonalen) Zeitpunkt auszuwerten. Selbstverständlich können dieselben Fuzzies dazu verwendet werden, mehrere Bildelemente, örtliche Bereiche und/oder das gesamte Bild auszuwerten. Dabei können z. B. die einzelnen Bildelemente nacheinander und/oder gleichzeitig unter Verwendung der Fuzzies ausgewertet werden.

Ferner können die einzelnen Fuzzies (im vorliegenden Beispiel in Fig. 2b bis Fig. 2d dargestellt) jeweils für eine bestimmte Wellenlänge (im Allgemeinen für eine Stelle des Strahlungsspektrums) definiert sein. Sie können jedoch auch für einen oder mehrere kontinuierliche Bereiche von Wellenlängen (im Allgemeinen Spektralbereich) definiert sein (z. B. durch eine mathematische Vorschrift) oder als Feld von Wahrscheinlichkeits-Werten vorgegeben sein, die mit einer gegebenen Auflösung quasi-kontinuierlich einen Spektralbereich abdecken. D. h. für jede Wellenlänge des Bereichs kann mit der durch die Auflösung gegebenen Unschärfe ein Wahrscheinlichkeits-Wert für jeden Objekt-Typ vorgegeben sein.

Eine solche Zuordnung, die nicht nur für eine Wellenlänge sondern für mehrere Wellenlängen oder für einen Spektralbereich Wahrscheinlichkeits-Werte zuordnet, kann sich zusätzlich zeitlich (z. B. Jahreszeit-bedingt) ändern, so dass eine dreidimensionale Zuordnung getroffen ist. Z. B. bei dem in Fig. 2b bis Fig. 2d dargestellten Satz mit den drei einzelnen Fuzzies für einen Objekt-Typ kann deren zeitliche Variation berücksichtigt werden, also insgesamt ein 3-dimensionales Fuzzy-Set für diesen Objekt-Typ definiert und verwendet werden.

Einzelne spektrale Signaturen (d. h. jeweils eine zu einem Beobachtungszeitpunkt vorliegende spektrale Signatur) eines Objekts (z. B. so genanntes Landbedeckungsobjekt, das auch Wassergebiete und Wolken aufweisen kann) können jeweils unter Verwendung einer Mehrzahl der Fuzzies daraufhin ausgewertet werden, ob das Objekt zu einer vorher definierten Klasse von Objekten gehört. Z. B. können die oben genannten Landschaftsobjekte ausgewertet werden. Dabei beschreiben diese "Fuzzy-Sätze" die spektrale Signatur bei verschiedenen Wellenlängen.

Einzelne Fuzzies werden in dem speziellen, hier anhand der Figuren näher erläuterten Ausführungsbeispiel z. B. über bekannte Verfahren zu einem gemeinsamen Konsenz verknüpft. Unter einem Konsenz werden insbesondere die Fuzzy-Sätze verstanden, die vorzugsweise den verschiedenen Eigenschaften eines bestimmten Objekt-Typs entsprechen. Bei einer bevorzugten Ausführungsform der Erfindung, die die zeitliche Veränderung der Strahlungseigenschaften von Objekten berücksichtigt, können jedoch auch Kombinationen von Fuzzies unter "Konsenz" verstanden werden, die den Strahlungseigenschaften zu verschiedenen Zeitpunkten entsprechen.

Je mehr Fuzzies für die Nachbildung (Auswertung) der spektralen Signatur 12 (bzw. im Allgemeinen für eine beliebige spektrale Signatur) verwendet werden, desto eindeutiger lässt sich ein bestimmtes Landschaftsobjekt zu dem Beobachtungszeitpunkt der spektralen Signatur identifizieren. Allerdings steigt auch die Anzahl der notwendigen Verknüpfungen (im einfachsten Fall Addition oder Multiplikation der Einzelwahrscheinlichkeiten für die Zuordnung zu einem Objekt-Typ) einzelner Fuzzies zu dem gemeinsamen Konsenz.

Nach Fig. 2a ist der Vergleich der Reflexionswerte in den spektralen Abschnitten A, B und C mit dem vorgegebenen Fuzzy-Set für einen Objekt-Typ zu führen, wobei die jeweiligen Einzelwahrscheinlichkeiten w_{A}, w_{B} und w_{C} ermittelt und vorzugsweise multiplikativ miteinander verknüpft werden. Für m (m sei eine ganze Zahl) verschiedene Objekt-Typen muss es demnach m verschiedene Fuzzy-Sets analog zu 2b) bis 2d) geben. In der Fernerkundung ist es bei der Vielzahl und Variabilität der Objekt-Typen sehr wahrscheinlich, dass sich diese durch die Auswertung der gemessenen Signale bei den Stellen A, B und C (siehe Fig. 2) nicht voneinander unterscheiden lassen. Darum werden die Messungen in einer größeren Anzahl m von Spektralbereichen vorgenommen, wobei dann auch die m Vergleiche für jeden Objekt-Typ miteinander zu einer Zuweisungswahrscheinlichkeitsaussage verknüpft werden.

Im Allgemeinen sollen durch die Fuzzies jedoch ausgewählte Eigenschaften, z. B. mindestens alle relevanten Eigenschaften abgebildet werden. Den Eigenschaften entsprechen in dem Ausführungsbeispiel jeweils die gemessenen Intensitäten bei der Wellenlänge, für die das jeweilige Fuzzy-Set definiert ist. Im dargestellten Beispiel zählen zu den Eigenschaften eine mittlere Intensität R (Reflexionswert) auf der Wellenlänge A, eine niedrigere Intensität R auf der Wellenlänge B sowie eine hohe Intensität auf der Wellenlänge C. Je besser die erfasste Intensität R mit einer theoretisch dem Landschaftsobjekt zugeordneten, mittels Fuzzy nachgebildeten Intensität übereinstimmt (insbesondere der Intensität bei der maximalen Wahrscheinlichkeit eines Fuzzy), desto höher ist die Wahrscheinlichkeit, dass es sich um das Landschaftsobjekt handelt, dass genau durch das Fuzzy in genau dem Wellenlängenbereich beschrieben wird. Die Wahrscheinlichkeiten werden in dem Ausführungsbeispiel für eine Verknüpfung der Einzelergebnisse auf eine Skala zwischen 0 und 1 normiert.

Die Fuzzies sind insbesondere spezielle Zuordnungswahrscheinlichkeitsfunktionen, die (wie in dem Beispiel der Fig. 2b bis Fig. 2d als Fuzzy-Set für genau einen Objekt-Typ, -Klasse für genau einen definierten Zeitraum erkennbar) ein Maximum der Wahrscheinlichkeit für einen Bereich der Bildmerkmal-Werte (hier: Intensitäten R) zuordnet. Durch die verschiedensten Randbedingungen kann sich das Strahlungsverhalten (z. B. Reflexionsverhalten) eines Objektes mehr oder weniger stark ändern, so dass sich auch das für dieses Objekt gemessene Signal, hier z. B. das Reflexionsverhalten, verändert. Daher sollte für ein Bereich von R die Zuweisungswahrscheinlichkeit "1" zugelassen werden. Außerhalb dieses Bereichs wird die Wahrscheinlichkeit, dass es sich um den Objekt-Typ mit genau diesem Fuzzy, und beim Vergleich aller gemessener Spektralbereiche -dem Fuzzy-Set, überhaupt noch um diesen Objekt-Typ handelt, immer geringer und sinkt letztendlich auf "0". Es ist dann davon auszugehen, dass über den Vergleich mit Fuzzies anderer Objekt-Typen eine Wahrscheinlichkeit größer "0" ermittelt werden kann. Bei dreidimensionalen Fuzzies werden dann zusätzlich die zeitlichen Variationen der Objekt-Typen berücksichtigt. Für das Fuzzy-Set in Fig. 2b bis 2d ergibt sich also unter Umständen eine Verschiebung auf der Achse mit R, wobei sich aber auch die trapezförmige Gestaltung der Fuzzies in Breite und Flankensteilheit deutlich ändern kann. Vorzugsweise beträgt jedoch für jede Wellenlänge das auf einer Skala zwischen 0 und 1 normierte Maximum 1, d. h. die Wahrscheinlichkeit dafür, dass der Bildmerkmal-Wert zu einer Objektklasse gehört, ist 1 (oder 100 %). Anders ausgedrückt erfüllt ein Bildmerkmal-Wert die Erwartung vollständig, wenn er im Bereich des Maximums liegt, wobei aber auch mehrere Objekt-Typen gleichzeitig diese Erwartung erfüllen können.

Alternativ oder zusätzlich sind die Fuzzies insbesondere spezielle Wahrscheinlichkeitsfunktionen in dem Sinn, dass die Wahrscheinlichkeit von einem Maximum nicht sprungartig, sondern stetig oder in einem anderweitigen funktionalen Zusammenhang über einen Bereich von Bildmerkmal-Werten (hier: Intensitäten) auf ein niedriges Wahrscheinlichkeits-Niveau, insbesondere auf Null, abnimmt. Die in dem vorangegangenen Absatz beschriebene Ausgestaltung von Fuzzies ermöglicht es insbesondere, einzelne Eigenschaften des beobachteten Objekts (z. B. die Intensität nicht nur bei einer bestimmten Wellenlänge sondern zusätzlich zu einem definierten Zeitpunkt oder Zeitraum) mit einer Wahrscheinlichkeit zwischen 0 und 1 zu bewerten. Damit können Objekte mit saisonal veränderten Eigenschaften mit Hilfe derselben, aber saisonal veränderten Fuzzies als Angehörige derselben Objektklasse zu einem saisonalen Zeitraum identifiziert werden. Es werden in den durch die einzelnen Fuzzies definierten Grenzen Toleranzen in den Eigenschaften zugelassen, sodass die Wahrscheinlichkeit für das Vorliegen des entsprechenden Objekt-Typs nicht bereits deshalb Null wird, weil die Eigenschaft von einem bestimmten, theoretisch vorhandenen Bildmerkmal-Wert geringfügig abweicht.

Wird nur eine einzelne Eigenschaft (z. B. die Intensität bei einer bestimmten Wellenlänge) ausgewertet, weisen mit großer Wahrscheinlichkeit mehrere Objektklassen genau diese Eigenschaft auf, so dass die Objekt-Klassifizierung nur zu einem mehrdeutigen Ergebnis führt. Die Unsicherheit kann verringert werden, indem bei einer Mehrzahl von Wellenlängen (im Allgemeinen: mehrere Eigenschaften) ausgewertet wird.

Gemäß der bevorzugten Ausgestaltung der Erfindung werden jedoch, wie oben bereits beschrieben, bei Objekten mit zeitlich veränderlichen Eigenschaften zeitlich veränderliche Fuzzy-Sets definiert, wobei jedes der Fuzzy-Sets einer Kombination der Eigenschaften entspricht, die jeweils zu einem definierten Zeitpunkt oder in einem definierten Zeitraum erwartet werden. Dadurch kann die Sicherheit bei der Klassifizierung von ortsfesten, aber zeitlich veränderlichen Objekten (insbesondere Landschaftsobjekten) wesentlich erhöht werden, obwohl eine geringe Zahl von einzelnen Fuzzies für genau den Untersuchungszeitraum in jedem der Sätze ausreichen sollte.

Unter einem Fuzzy-Set wird auch eine Ausgestaltung verstanden, bei der ein einzelnes Fuzzy Wahrscheinlichkeiten für einen oder mehrere kontinuierliche Spektralbereiche definiert und/oder als Feld von Wahrscheinlichkeits-Werten für mehr als eine einzige Stelle im Strahlungsspektrum definiert ist. Ein solches Fuzzy enthält vergleichbare Informationen wie ein Satz monospektraler Fuzzies.

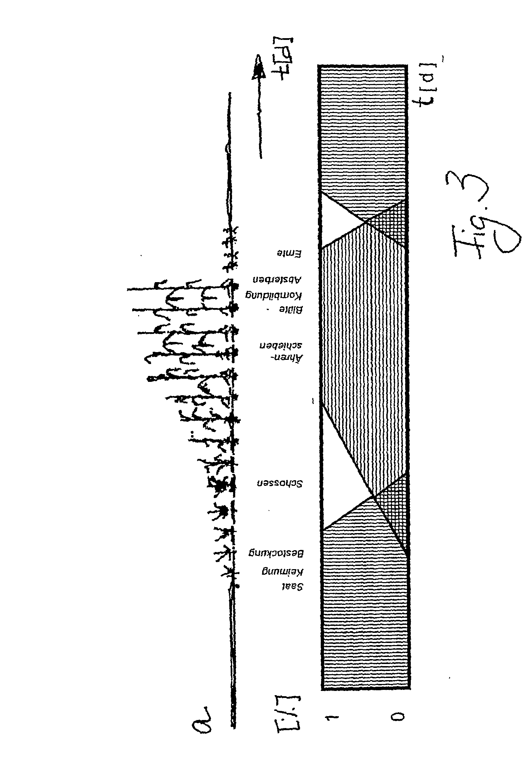

Fig. 3 zeigt schematisch am Beispiel eines Weizenfeldes, wie das phänologische (im Laufe des Jahres veränderliche) Verhalten eines Landschaftsobjekts in ein "Landnutzungsfuzzy" überführt wird. Das temporale Verhalten verschiedener kultivierter Landschaftsobjekte ist durch Landnutzugscharakteristiken abbildbar (hier: z. B. durch die beschriebene Kombination von Fuzzy-Sets). Unter dem "Landnutzungsfuzzy" kann daher eine solche Kombination von Fuzzy-Sets verstanden werden, bzw. die Landnutzungsfuzzies werden mit den Fuzzies der spektralen Signaturen zu einem dreidimensionalen Fuzzy-Set verknüpft.

In einer Reihe a sind in Fig. 3 verschiedene Entwicklungs- und/oder Bearbeitungsstufen des Weizenfeldes über der Zeit t dargestellt. Die dargestellte Zeitachse erstreckt sich über ein Kalenderjahr. In Abhängigkeit von der Jahreszeit lassen sich Gesamt-Wahrscheinlichkeiten für bestimmte Entwicklungs- und/oder Bearbeitungsstufen definieren. Dargestellt sind in Fig. 3 Gesamt-Wahrscheinlichkeiten für zwei verschiedene Entwicklungsstufen: "Boden", ohne Vegetation, (zum Jahresanfang und Jahresende) und "Weizenpflanze" (in der Jahresmitte). Die Gesamt-Wahrscheinlichkeiten können z. B. als gewichtete und normierte Summe der Wahrscheinlichkeiten für einzelne Objekt-Eigenschaften aufgefasst werden.

Jedes der Landnutzungsfuzzies "Boden" und "Weizenpflanze" ist (wenn man berücksichtigt, dass sich die erwartete zeitliche Entwicklung am Ende des Jahres wieder durch die erwartete zeitliche Entwicklung am Anfang des Jahres fortsetzt) eine trapezförmige Gesamt-Wahrscheinlichkeitsfunktion mit der Zeitachse als Basis. Etwa im Frühjahr und im Herbst überlappen sich die Trapez-Funktionen in den Flanken, d. h. bei Wahrscheinlichkeits-Werten zwischen 0 und 1. Es erfolgt streng genommen in diesen Zeiträumen der Übergang von einer Landnutzungsklasse in eine andere, wobei dann jede einzelne nicht mehr mit der Wahrscheinlichkeit 1 zugewiesen werden könnte.

Zum Beispiel wird der phänologische Verlauf der Landnutzungsklasse "Weizen" durch eine Reihe von Faktoren (z.B. Klima - Niederschlag, Temperatur) bestimmt, die ihrerseits eine hohe zeitliche Variabilität aufweisen. Dementsprechend muss in zeitlich variablen Fuzzies dieser Effekt berücksichtigt werden. Auch wenn die zeitliche Zuweisungswahrscheinlichkeit für Weizen und Boden in Abb. 3 fuzzyähnlich verläuft, dann soll es nur den zeitlichen Übergang von idealisierten "Bodenfuzzies" analog zu 2a) bis 2d) in idealisierte "Weizenfuzzies" vermitteln. Mit einem 3-dimensonalen Fuzzy-Set werden aber genau solche verschiedenen Phasen und Übergänge beschrieben, d.h. ein 3-dimensionales Fuzzy-Set für die Landnutzungsklasse "Weizen" beinhaltet auch, dass es zu bestimmten Zeiten die Phase "(nur) Boden" enthält.

Im Allgemeinen können mehr als zwei Landnutzungsfuzzies für einen zeitlichen Bereich (im Beispiel: 1 Jahr) definiert werden. Beispielsweise könnte in der Phase "Boden" zwischen "unbedecktem Boden" und "schneebedecktem Boden" unterschieden werden und könnte in der Phase "Weizen" zwischen "früher Entwicklung der Pflanzen" und "reife Pflanzen mit ausgebildeten Früchten" unterschieden werden. Noch allgemeiner formuliert ermöglicht es die Erfindung, die zeitliche Veränderung der Strahlungseigenschaften unter Verwendung einer Mehrzahl von dreidimensionalen Fuzzy-Sets auszuwerten, wobei jeder der Fuzzy-Sets einen erwarteten, zu einem Zeitpunkt gegebenen Zustand der Strahlungseigenschaften beschreibt.

Neben den Fuzzies der spektralen Signaturen sind Fuzzies für andere Bildmerkmale (z. B. in dem Beispiel der Fig. 2b bis Fig. 2d Textur- oder Kompaktheitsmaße) berücksichtigbar.

Neben der Landnutzung wird eine Landbedeckung für die Identifikation und/oder Klassifikation berücksichtigt. Landschaftsobjekte werden durch Wolken, Schnee und/oder ähnliche Phänomene teilweise überdeckt. Diese Überdeckung wird durch Landbedeckungsklassen identifiziert.

Laubwälder, Nadelwälder und/oder andere nicht kultivierte Landschaftsobjekte sind wahlweise als Landbedeckung und/oder Landnutzung klassifizierbar. Die Art der Klassifizierung richtet sich nach den gewünschten Ergebnissen der Auswertung.

Das Erscheinungsbild eines Landschaftsobjektes kann sich über eine Szene im phänologischen Erscheinungsbild infolge der geographischen Lage ändern. Auch Änderungen des Sonnenstandes führen zu einem veränderten Erscheinungsbild ein und desselben Objektes, bedingt durch die winkelabhängigen Reflexionseigenschaften des Objektes. Ein Landschaftsobjekt kann sich außerdem hinsichtlich seines Erscheinungsbildes im Rahmen seiner Nutzung und natürlichen Variabilität über ein Jahr hin ändern. Das temporale Verhalten der Landnutzung wird daher fortwährend an tatsächlich auftretende Gegebenheiten angepasst. So ist beispielsweise eine Anpassung an klimatologische Veränderungen und/oder an Wachstumsbedingungen denkbar. Die Ergebnisse der Identifikation und/oder Klassifikation fließen zu diesem Zweck in einen Landnutzungsklassifikation zurück.

Die Änderung des jährlichen Erscheinungsbildes eines Landschaftsobjektes kann weiter in einer Zeitreihe erfasst werden und so zur Einschätzung der Nutzung, der Nutzungsintensität und damit zur Klassifikation des jeweiligen Landschaftsobjektes beitragen. Betrachtet man verschiedene Jahre bzw. unterschiedliche geographische Zonen (z.B. Südspanien und Norddeutschland), kann es, bedingt durch klimatische Veränderungen zwischen den Jahren, zu zeitlichen Verschiebungen im phänologischen Verlauf der Vegetationsperiode kommen.

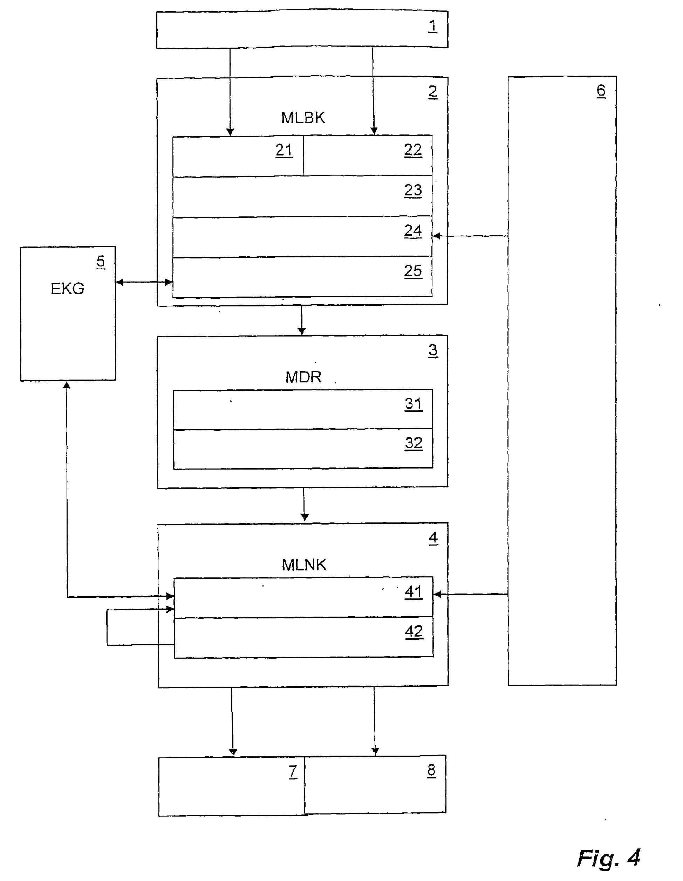

Fig. 4 zeigt schematisch einen Prozessor zur automatisierten Identifikation und/oder Klassifikation von Fernerkundungsdaten 1 in Landnutzungsklassen 7 umfassend die Module "Monotemporale Landbedeckungsklassifikation (MLBK)" 2, "Multitemporale Datenrekonstruktion (MDR)" 3, "Multitemporale Landnutzungsklassifikation (MLNK)" 4 und "Ermittlung der Klassifikationsgenauigkeit (EKG)" 5 sowie eine Datenbank 6. Das Modul MLBK 2 dient der Identifikation von Landbedeckungsklassen innerhalb einer Szene. Landbedeckungsklassen sind beispielsweise Wolken, Dunst, Wasser, Vegetation, Boden- oder versiegelte Flächen. Dem Modul MLBK 2 sind die Teilprozesse "Texturanalyse" 21, "Spektralanalyse" 22, "Automatische Segmentierung" 23, "Landbedeckungsklassifikation" 24 sowie "Objektidentifikation" 25 zugeordnet. Das Modul MDR 3 betrifft die Eliminierung wolkenkontaminierter Datenbereiche sowie der Identifizierung unveränderlicher und veränderlicher Datenbereiche. Das Modul MDR 3 umfasst die Teilprozessore "Zeitlich-räumliche Datenrekonstruktion" 31 und "Qualitätskontrolle" 32. Das Modul MLNK 4 dient der Zuweisung der Nutzungsintensität zu Landbedeckungs- und/oder Landnutzungsobjekten und damit einer Identifizierung der Landnutzungsklassen. Es umfasst die Teilprozessoren "Landnutzungsklassifikation" 41 sowie "Anpassung des temporalen Verhaltens" der Landnutzung 42.

Neben der eigentlichen Klassifikation erfolgt durch eine Qualitätskontrolle eine Ermittlung der Klassifikationsgenauigkeit. Hierfür ist das Modul EKG 5 vorgesehen. Durch das Modul EKG 5 kann iterativ eine Reklassifikation initiiert werden, um das Klassifikationsergebnis auch rückwirkend/iterativ verbessern zu können.

Die Module 2 - 5 können auf einem gemeinsamen Prozessor und/oder auf getrennten Einheiten ausgebildet sein. Sie greifen indirekt und/oder direkt auf die Datenbank 6 mit Methoden und Parametern zu.

Daten unterschiedlicher Sensoren und/oder unterschiedlicher geometrischer Auflösung werden durch nicht dargestellte Module und/oder Verfahren atmosphärisch korrigiert und/oder georeferenziert. Die aufbereiteten Fernerkundungsdaten 1 sind multispektrale Daten.

Als Ergebnis liefert die Auswertung der Fernerkundungsdaten 1 einen multitemporalen Datensatz klassifizierter Bilder der Landbedeckung und ein oder mehrere Bilder der Landnutzung in sogenannten Landnutzungsklassen 7. Darüber hinaus wird das Verfahren bei hinreichender Anzahl multitemporaler Stützstellen zusätzlich für eine kurzfristige Prognose der Entwicklung der Landnutzung durch Nutzung einer Anpassung des temporalen Verhaltens der Landnutzung und der "Extrapolation" des Verhaltens von Landnutzungen eingesetzt. Es liefert dann zusätzlich Landschaftsprognosen 8. Dadurch ist die Möglichkeit gegeben, den jährlichen Verlauf der phänologischen Entwicklung von Vegetation kurzzeitig vorzuschätzen.

Die Module 2 bis 5 und die zugehörigen Teilprozesse werden im Folgenden einzeln beschrieben.

Das Modul MLBK 2 besteht aus fünf Teilprozessen. Die "Texturanalyse" 21 und "Spektralanalyse" 22 werden parallel auf die Eingangsdaten 1 angewandt. Sie dienen zur Auswertung der jeweils für einen Pixel gegebenen spektralen Informationen und der Textur in einem definierten Pixelumkreis. Beide Teilprozesse sind hinsichtlich der integrierten Submodule identisch aufgebaut. Daran schließen sich die "Segmentierung" 23, die eigentliche "Landbedeckungsklassifikation" 24 sowie die "Objektidentifikation" 25 klassifizierter Bildobjekte an.

Eingangsdaten für die spektrale Analyse 21 sind die einzelnen multispektralen Fernerkundungsdaten 1 aus einer Zeitreihe. Das können sowohl Einzelszenen als auch Komposite (Wochen- oder 10-Tages-Komposite) sein. Zunächst werden sichere Landbedeckungsklassen identifiziert. Sichere Landbedeckungsklassen sind Klassen, deren Charakteristik sich nicht oder nur minimal spektral und/oder räumlich verändert. Die identifizierten Landbedeckungsklassen werden als Objekte gekennzeichnet. Vorzugsweise werden die Landbedeckungsklassen Wolken, Dunst, Schnee, Wasser, unbedeckter Boden und Vegetation identifiziert.

Ähnlich dem Teilprozess "Spektrale Analyse" 21 werden auch bei der "Texturanalyse" 22 die für die Landbedeckungsklassen charakteristischen Eigenschaften zur 1-dentifizierung von entsprechenden Objekten genutzt. Die charakteristischen Eigenschaften sind Texturen, welche Homogenitätskriterien folgend ermittelt werden. Vorzugsweise werden zehn Homogenitätsklassen in Abstufung nach einem statistischen Kriterium identifiziert.

Eingangsdaten der "Segmentierung" 23 sind die Ergebnisse der "spektralen Analyse" 21 und der "Texturanalyse" 22. Da selbst bei einer gleichen Anzahl von Spektralund Texturklassen nicht davon ausgegangen werden kann, dass die Ergebnisse der zuvor beschriebenen Teilprozesse deckungsgleich sind, erfolgt eine Zusammenführung beider Informationen nach definierten Regeln, so dass im Ergebnis neue Segmente entstehen. Diese Segmente werden im Weiteren als Bildobjekte behandelt.

Bei der eigentlichen "Landbedeckungsklassifikation" 24 werden die Ergebnisse der "Segmentierung" 23 mit vorzugsweise vordefinierten Fuzzies oder auch Schwellwerten der verschiedenen Landbedeckungsklassen verglichen. Die Zuordnung zu den einzelnen Klassen erfolgt dann anhand des vorgegebenen Klassenmodells.

Eine zusätzlich betriebene Generalisierung der Klassifikationsergebnisse kann zu einer Verringerung des "Salt-and-Pepper"-Effektes genutzt werden, um Einzelpixel zu eliminieren und die Anzahl der identifizierbaren Objekte zu verringern.

Durch den Teilprozess "Objekterkennung" 24 wird jedem identifizierten Bildobjekt eine Klassen-Kennung vergeben. Für eine multitemporale Auswertung wird außerdem eine Objekt-Kennung innerhalb der Klasse vergeben, um das Auseinanderfallen und das Zusammenwachsen von Objekten zu verfolgen.

Das Modul MDR 3 besteht aus dem Teilprozess "Zeitlich-räumliche Datenrekonstruktion" 31 und der sich anschließenden "Qualitätskontrolle" 32.

In der "zeitlich-räumlichen Datenrekonstruktion" 31 werden die Ergebnisse der Landbedeckungsklassifikation aller Fernerkundungszeitschnitte untersucht. Dadurch werden wolken-, dunst- sowie temporär schneekontaminierte Pixel in der Zeitreihe identifiziert. Im Anschluss daran wird der Spektralverlauf der kontaminierten Pixel für die wahrscheinlichste Landnutzungsklasse geschätzt, indem über Interpolationsverfahren der wahrscheinlichste Spektralverlauf errechnet und in die Datenzeitreihe eingesetzt wird. Die Interpolation erfolgt vorzugsweise über Zeitreihenanalyse und geostatistische Verfahren. Als Stützstellen für die Interpolationen werden die gemessenen, d.h. die als nicht "kontaminiert" identifizierten Pixel genutzt. Die Ergebnisse der beiden oben genannten Interpolationsverfahren werden miteinander verglichen. Differieren beide Werte um mehr als ein zugelassenes Toleranzmaß für die betrachtete Fehlstelle, dann werden die Ergebnisse zunächst verworfen und die nächste Fehlstelle wird bearbeitet. Dieses Vorgehen erfolgt so lange für einen Zeitabschnitt, bis keine Verbesserung mehr erzielt werden kann. Der nächsten Datensatz wird dann in gleicher Weise bearbeitet.

Ein wiederholter Rekonstruktionsversuch (Iterationsschritt) der Zeitreihe wird erst durchgeführt, wenn alle anderen Datensätze bestmöglich vervollständigt wurden. Die Iteration der zeitlichen und räumlichen Interpolation dauert so lange an, bis die Ergebnisse aus beiden Berechnungen im Vertrauensintervall liegen und nach der Mittelwertberechnung als korrekte Werte eingesetzt werden können.

Auf diese Weise wird eine sukzessive Ergänzung der Fehlstellen in der gesamten Zeitreihe erzielt. Eine Datei, die den prozentualen Anteil fehlender Datenpunkte in der Zeitreihe eines Pixels angibt, kann zur Fehlerabschätzung der Ergebnisse herangezogen werden. Je mehr Datenpunkte je Pixel fehlen, desto größer ist die Wahrscheinlichkeit für eine Fehlerbelastung der resultierenden Zeitreihe.

Mit dem Verfahren werden Datenlücken gefüllt, wobei vorhandene Werte nicht verändert werden. Das Modul liefert also keine Korrektur der gemessenen Werte, sondern geht von deren Richtigkeit und Plausibilität aus und führt zu einem lückenlosen Datensatz als Grundlage für statistische Berechnungen. Im Ergebnis liefert dieser Arbeitsschritt eine flächendeckend gefüllte, d.h. rekonstruierte und georeferenzierte Fernerkundungsdatenzeitreihe sowie ein Fehlerwahrscheinlichkeitsbild.

Da trotz der iterativen Vorgehensweise des Teilprozesses 31 Fehler bei der Datenrekonstruktion auftreten können, wird das Ergebnis einer "Qualitätskontrolle" 32 unterworfen. Hierfür wird nach vollständiger Neuberechnung der Werte aller kontaminiert gekennzeichneten Pixel in der gesamten Zeitreihe ein Plausibilitätstest durchgeführt. Dabei werden die Pixel, die den Plausibilitätstest nicht erfüllt haben oder bei denen nicht hinreichend viele Stützstellen vorhanden waren, für die weitere Datenauswertung als gesperrt markiert.

Das Modul MLNK 4 bearbeitet mit den aufeinander folgenden Teilprozessen "Landnutzungsklassifikation" 41 und "Anpassung des temporalen Verhaltens" 42 der Landnutzung die rekonstruierten Ergebnisse des vorangegangenen Moduls MDR 3. Die erstellte Fernerkundungsdatenzeitreihe wird der Klassifikation, basierend auf den abgeleiteten n-dimensionalen Fuzzy-Sets, unterworfen.

Die Eingangsdaten des Teilprozesses "Landnutzungsklassifikation" 41 sind die rekonstruierten und interpolierten Zeitreihen des Moduls MDR 3. Für jedes Pixel liegen daher die spektrale Signatur, die Spektralklasse und die Texturklasse als Funktion der Zeit vor. In der assoziierten Datenbank 6 sind die Fuzzy-Spektralfunktionen für die verschiedenen Modellklassen der Landnutzung wie auch der Landbedeckung abgebildet. Zur Landnutzung zählen beispielsweise alle kultivierten Landschaftsobjekte wie Grasland, Getreide, Acker. Wetterphänomene wie Schnee, Wolken und Dunst sowie nicht kultivierte Landschaftsobjekte wie Wälder werden in Landbedeckungsklassen abgebildet. Entsprechend der in Fig. 2 dargestellten schematischen Fuzzy-Funktionen sind für jede Modellklasse die Fuzzies für die hier beispielhaft gewählten spektralen Bereiche A, B und C eingetragen. Für hyperspektrale Fernerkundungsdaten können zusätzliche Spektralbereiche hinzukommen.

Daneben liegen in der Datenbank 6 die Fuzzy-Funktionen für das temporale Verhalten von Klassen der Landnutzung vor. Dazu gehört beispielsweise die phänologische Entwicklung der Modellklassen entsprechend Fig. 3. Beispiele dieser Modellklassen sind Sommer- und Wintergetreide aber auch unterschiedliche Laubwald-typen, die nur durch ihre Phänologie getrennt werden können.

Der Teilprozess "zeitliche Anpassung des temporalen Verhaltens der Landnutzung" 42 wird benötigt, um beispielsweise die Phänologie einer Landnutzungsklasse entsprechend der aktuellen klimatischen Entwicklung eines spezifischen Jahres und damit seiner Dynamik anzupassen. So ist zum Beispiel die Phänologie von Mais davon abhängig, wo der Mais angebaut wird. Der Beginn der Aussaat hängt beispielsweise von geographischen und/oder klimatischen Verhältnissen, aber auch von den landbaulichen Besonderheiten ab. Eine Möglichkeit, die zeitliche Anpassung der Phänologie zu optimieren, ist die Steuerung des Beginns der Phänologie über die mit Fernerkundungssensoren gemessene Landoberflächentemperatur.

Das bedeutet, dass über den Teilprozess 42 die jeweilige Einzelszene im Gesamtkontext des jährlichen Zyklus eingepasst und somit auch eine Vorabschätzung eines Folgedatensatzes (Prognose) realisiert werden kann.

In dem Modul EKG 5 werden alle während der Bearbeitung angefallenen Qualitätsprodukte ausgewertet, um einerseits die Möglichkeit einer Zuordnung von Pixeln zu einer Klasse zu hinterfragen und andererseits ein Gesamtfehlerbild als Zusatzdaten zur Klassifikation mitzuliefern. Qualitätsprodukte sind beispielsweise das Fehlerwahrscheinlichkeitsbild aus der "Zeitlich-räumlichen Datenrekonstruktion" 31 oder der Datensatz "Pixel als gesperrt markiert" aus der "Qualitätskontrolle" 32.

Die Module 2 - 5 können auf die Methoden- und Parameterdatenbank 6 zugreifen. In dieser werden beispielsweise die Trainingsspektren für Landbedeckungsklassen (z.B. Wolken, Dunst, Wasser, Vegetation, unbedeckter Boden), Modellklassen der Nutzung, Spektren- und jährliche Nutzungsverläufe, -intensitäten und Phänologien für Einzelobjekte abgelegt.

In der Datenbank 6 können auch neue Einzelfälle abgelegt und neu bewertet werden, um eine Verbesserung der Klassifikationsergebnisse zu erreichen.

## Patentansprüche

1. Verfahren zur mindestens teilweise automatisierten Auswertung von Fernerkundungsdaten, wobei Objekte mittels Idenfikationsparameter anhand von Bildmerkmalen identifiziert und/oder klassifiziert werden, wobei die Fernerkundungsdaten als multispektrale Fernerkundungsdatenzeitreihe vorlieben und die Objekte anhand der multispektral und multitemporal definierten Identifikationsparameter aus den Fernerkundungsdaten identifiziert und/oder klassifiziert werden,
**dadurch gekennzeichnet, dass**
- eine Mehrzahl von spektralen Signaturen eines Objekts ausgewertet wird, wobei jede der spektralen Signaturen Strahlungseigenschaften des Objekts bei mehr als einer Strahlungs-Wellenlänge beschreibt,
- bei einer Auswertung der einzelnen spektralen Signaturen jeweils Wahrscheinlichkeits-Funktionen (Fuzzies) verwendet werden, wobei die Fuzzies Werten der Strahlungseigenschaften oder Werten einer daraus abgeleiteten Größe ein Bewertungsmaß zuordnen,
- durch die Auswertung die Bewertungsmaße der Strahlungseigenschaften des Objekts festgestellt werden und
- unter Verwendung der festgestellten Bewertungsmaße ermittelt wird, ob das Objekt zu einem den Fuzzies entsprechenden Typ von Objekten gehört (Identifizierung und/oder Klassifizierung).

2. Verfahren nach dem vorhergehenden Anspruch, wobei die spektralen Signaturen die Strahlungseigenschaften des Objekts jeweils zu einem von den anderen spektrale Signaturen verschiedenen Zeitpunkt oder innerhalb von einem verschiedenen Zeitraum beschreiben.

3. Verfahren nach Anspruch 1 oder 2, **dadurch gekennzeichnet, dass** die Fernerkundungsdaten (1) zeitlich-raumlich rekonstruiert werden.

4. Verfahren nach einem der Ansprüche 1 bis 3, **dadurch gekennzeichnet, dass** Identifikationsparameter mindestens in Abhängigkeit von spektralen Signaturen (11-17) und einem temporalen Landnutzungsverhalten definiert werden.

5. Verfahren nach Anspruch 4, **dadurch gekennzeichnet, dass** Identifikationsparameter iterativ reklassifiziert werden, wobei mindestens die temporale Abhängigkeit von Landnutzungscharakteristiken reklassifiziert wird.

6. Verfahren nach einem der Ansprüche 4 oder 5, **dadurch gekennzeichnet, dass** ein jahreszeitlicher Verlauf in einer Datenzeitreihe dokumentiert wird und Landnutzungscharakteristiken an den erfassten jahreszeitlichen Verlauf adaptiert werden.

7. Verfahren nach einem der Ansprüche 4 bis 6, **dadurch gekennzeichnet, dass** jahreszeitlich bedingte Änderungen der Landnutzungscharakteristiken prognostiziert werden.

8. Verfahren nach einem der vorhergehenden Ansprüche, **dadurch gekennzeichnet, dass** eine Identifikation und/oder Klassifikation eines Objekts auf der Basis n-dimensionaler Fuzzy-Funktionen erfolgt.

9. Verfahren nach einem der vorhergehenden Ansprüche, **dadurch gekennzeichnet, dass** aus einer spektralen Signatur eines Objekts spektrale Wahrscheinlichkeiten als Funktionen eines Bildmerkmals gebildet werden und temporale Wahrscheinlichkeiten für eine bestimmte zeitliche Entwicklungsund/oder Bearbeitungsstufe des Objektes gebildet werden und dass unter Verwendung der spektralen Wahrscheinlichkeiten und der temporalen Wahrscheinlichkeiten andere Objekte identifiziert und/oder klassifiziert werden.

10. Vorrichtung zur mindestens teilweise automatisierten Auswertung von Fernerkundungsdaten, mittels Identifikationsparameter, umfassend mindestens eine Datenbank, wobei mindestens die Identifkationsparameter in der Datenbank ablegbar sind, und mindestens einen Prozessor, wobei durch den Prozessor Objekte anhand von Bildmerkmalen identifizierbar und/oder klassifizierbar sind, wobei
die Vorrichtung ausgestaltet ist, aus den als multispektrale Fernerkundungsdatenzeitreihe vorliegenden Fernerkundungsdaten die Objekte anhand der multispektral und multitemporal definierten Indentifikationsparameter zu identifizieren und/oder zu klassifizieren, **dadurch gekennzeichnet, dass**
der Prozessor ein Modul (4) aufweist, das ausgestaltet ist,
- eine Mehrzahl von spektralen Signaturen eines Objekts auszuwerten, wobei jede der spektralen Signaturen Strahlungseigenschaften des Objekts bei mehr als einer Strahlungs-Wellenlänge beschreibt,
- bei einer Auswertung der einzelnen spektralen Signaturen jeweils unter Verwendung von Wahrscheinlichkeits-Funktionen (Fuzzies) Werten der Strahlungseigenschaften oder Werten einer daraus abgeleiteten Größe ein Bewertungsmaß zuzuordnen,
- durch die Auswertung die Bewertungsmaße der Strahlungseigenschaften des Objekts festzustellen und
- unter Verwendung der festgestellten Bewertungsmaße zu ermitteln, ob das Objekt zu einem den Fuzzies entsprechenden Typ von Objekten gehört (Identifizierung und/oder Klassifizierung).

11. Vorrichtung nach Anspruch 10, **dadurch gekennzeichnet, dass** der Prozessor mindestens ein Modul (3) zur multitemporalen Datenrekonstruktion MDR umfasst, wobei die Fernerkundungsdaten (1) durch das Modul (3) zeitlich-räumlich rekonstruierbar sind.

12. Vorrichtung nach Anspruch 10 oder 11, **dadurch gekennzeichnet, dass** Identifikationsparameter mindestens in Abhängigkeit von spektralen Signaturen (11 - 17) und einem temporalen Landnutzungsverhalten definiert sind.

13. Vorrichtung nach Anspruch 10, **dadurch gekennzeichnet, dass** der Prozessor ein Modul (5) zur Ermittlung der Klassifikationsgenauigkeit EKG umfasst und Identifikationsparameter durch das Modul (5) iterativ reklassifizierbar sind, wobei mindestens die temporale Abhängigkeit von Landnutzungscharakteristiken reklassifizierbar ist.

14. Vorrichtung nach einem der Ansprüche 10 oder 11, **dadurch gekennzeichnet, dass** ein jahreszeitlicher Verlauf in einer Datenzeitreihe dokumentiert ist und Landnutzungscharakteristiken an den erfassten jahreszeitlichen Verlauf adaptierbar sind.

15. Vorrichtung nach einem der Ansprüche 10 bis 12, **dadurch gekennzeichnet, dass** jahreszeitlich bedingte Änderungen der Landnutzungscharakteristiken prognostizierbar sind.

16. Vorrichtung nach einem der Ansprüche 10 bis 15, **dadurch gekennzeichnet, dass** Identifikationsparamter als n-dimensionale Fuzzy-Funktionen definiert sind.

## Claims

1. Method for the at least partially automated evaluation of remote sensing data, wherein objects are identified and/or classified by means of identification parameters on the basis of image features, wherein the remote sensing data exist in the form of a multi-spectral remote sensing data time series and the objects are identified and/or classified on the basis of the identification parameters defined in a multi-spectral and multi-temporal manner from the remote sensing data,
**characterised in that**
- a plurality of spectral signatures of an object are evaluated, wherein each of the spectral signatures describes radiation properties of the object at more than one radiation wavelength,
- probability functions (fuzzies) are used in each case during an evaluation of the individual spectral signatures, wherein the fuzzies allocate an assessment measure to values of the radiation properties or to values of a variable derived therefrom,
- the assessment measures of the radiation properties of the object are determined by the evaluation, and
- using the determined assessment measures, it is ascertained whether the object belongs to a type of objects corresponding to the fuzzies (identification and/or classification).

2. Method according to the preceding claim, wherein the spectral signatures describe the radiation properties of the object in each case at a time different from the other spectral signatures or within a different period of time.

3. Method according to claim 1 or 2, **characterised in that** the remote sensing data (1) are temporally/spatially reconstructed.

4. Method according to one of claims 1 to 3, **characterised in that** identification parameters are defined at least as a function of spectral signatures (11-17) and a temporal land usage behaviour.

5. Method according to claim 4, **characterised in that** identification parameters are iteratively reclassified, wherein at least the temporal dependence of land usage characteristics is reclassified.

6. Method according to one of claims 4 or 5, **characterised in that** a seasonal trend is documented in a data time series and land usage characteristics are adapted to the recorded seasonal trend.

7. Method according to one of claims 4 to 6, **characterised in that** seasonal changes in the land usage characteristics are predicted.

8. Method according to one of the preceding claims, **characterised in that** an identification and/or classification of an object takes place on the basis of n-dimensional fuzzy functions.

9. Method according to one of the preceding claims, **characterised in that** spectral probabilities are formed from a spectral signature of an object as functions of an image feature, and temporal probabilities are formed for a given temporal development stage and/or processing stage of the object, and **in that** other objects are identified and/or classified using the spectral probabilities and the temporal probabilities.

10. Device for the at least partially automated evaluation of remote sensing data, by means of identification parameters, comprising at least one database, wherein at least the identification parameters can be stored in the database, and at least one processor, wherein objects can be identified and/or classified by the processor on the basis of image features, wherein
the device is designed to identify and/or classify the objects on the basis of the identification parameters defined in a multi-spectral and multi-temporal manner from the remote sensing data which exist in the form of a multi-spectral remote sensing data time series,
**characterised in that**
the processor comprises a module (4) which is designed
- to evaluate a plurality of spectral signatures of an object, wherein each of the spectral signatures describes radiation properties of the object at more than one radiation wavelength,
- during an evaluation of the individual spectral signatures, to use probability functions (fuzzies) in each case to allocate an assessment measure to values of the radiation properties or to values of a variable derived therefrom,
- to determine the assessment measures of the radiation properties of the object by the evaluation, and
- to use the determined assessment measures to ascertain whether the object belongs to a type of objects corresponding to the fuzzies (identification and/or classification).

11. Device according to claim 10, **characterised in that** the processor comprises at least one module (3) for multi-temporal data reconstruction MDR, wherein the remote sensing data (1) can be temporally/spatially reconstructed by the module (3).

12. Device according to claim 10 or 11, **characterised in that** identification parameters are defined at least as a function of spectral signatures (11-17) and a temporal land usage behaviour.

13. Device according to claim 10, **characterised in that** the processor comprises a module (5) for determining the classification accuracy EKG and identification parameters can be iteratively reclassified by the module (5), wherein at least the temporal dependence of land usage characteristics can be reclassified.

14. Device according to claim 10 or 11, **characterised in that** a seasonal trend is documented in a data time series and land usage characteristics can be adapted to the recorded seasonal trend.

15. Device according to one of claims 10 to 12, **characterised in that** seasonal changes in the land usage characteristics can be predicted.

16. Device according to one of claims 10 to 15, **characterised in that** identification parameters are defined as n-dimensional fuzzy functions.

## Revendications

1. Procédé pour évaluer de manière au moins partiellement automatisée des données de détection à distance, des objets étant identifiés et/ou classifiés au moyen de paramètres d'identification à l'aide de caractéristiques d'image, les données de détection à distance étant présentes en tant que série chronologique multispectrale de données de détection à distance et les objets étant identifiés et/ou classifiés à l'aide des paramètres d'identification définis de manière multispectrale et multitemporelle à partir des données de détection à distance,
**caractérisé en ce que**
- une pluralité de signatures spectrales d'un objet sont évaluées, chaque signature spectrale décrivant des propriétés de rayonnement de l'objet pour plus d'une longueur d'onde de rayonnement,
- on emploie à chaque fois des fonctions de probabilité (fonctions floues) lors d'une évaluation des différentes signatures spectrales, les fonctions floues associant une cote d'évaluation à des valeurs des propriétés de rayonnement ou à des valeurs d'une grandeur déduites de ces dernières.
- les cotes d'évaluation des propriétés de rayonnement de l'objet sont définies par l'évaluation, et
- en employant les cotes d'évaluation définies, on détermine si l'objet fait partie d'un type d'objet correspondant aux fonctions floues (identification et/ou classification).

2. Procédé selon la revendication précédente, les signatures spectrales décrivant à chaque fois les propriétés de rayonnement de l'objet à un instant différent des autres signatures spectrales ou à l'intérieur d'une période de temps différente.

3. Procédé selon la revendication 1 ou 2, **caractérisé en ce que** les données de détection à distance (1) sont reconstruites de manière temporelle et spatiale.

4. Procédé selon l'une des revendications 1 à 3, **caractérisé en ce que** des paramètres d'identification sont définis en fonction de signatures spectrales (11-17) et d'une façon temporelle d'utilisation du sol.

5. Procédé selon la revendication 4, **caractérisé en ce que** les paramètres d'identification sont reclassifiés de manière itérative, au moins la dépendance temporelle des caractéristiques d'utilisation du sol étant reclassifiée.

6. Procédé selon l'une des revendications 4 ou 5, **caractérisé en ce qu'**une évolution saisonnière est documentée dans une série chronologique de données et que des caractéristiques d'utilisation du sol sont adaptées à l'évolution saisonnière détectée.

7. Procédé selon l'une des revendications 4 à 6, **caractérisé en ce que** des variations, dues aux saisons, des caractéristiques d'utilisation du sol sont pronostiquées.

8. Procédé selon l'une quelconque des revendications précédentes, **caractérisé en ce qu'**une identification et/ou une classification d'un objet ont/a lieu sur la base de fonctions floues à n dimensions.

9. Procédé selon l'une quelconque des revendications précédentes, **caractérisé en ce que** des probabilités spectrales sont formées à partir d'une signature spectrale d'un objet en tant que fonctions d'une caractéristique d'image et que des probabilités temporelles sont formées pour un certain niveau temporel de développement et/ou de traitement de l'objet et **en ce que** d'autres objets sont identifiés et/ou classifiés en employant les probabilités spectrales et les probabilités temporelles.

10. Dispositif pour évaluer de manière au moins partiellement automatisée des données de détection à distance au moyen de paramètres d'identification, ledit dispositif comportant au moins une banque de données, dans laquelle peuvent être déposés au moins les paramètres d'identification, et au moins un processeur qui peut identifier et/ ou classifier des objets à l'aide de caractéristiques d'image,
le dispositif étant agencé pour, à partir des données de détection à distance présentes en tant que série chronologique multispectrale de données de détection à distance, identifier et/ou classifier les objets à l'aide des paramètres d'identification multispectraux et multitemporels,
**caractérisé en ce que**
le processeur comporte un module (4) qui est agencé pour
- évaluer une pluralité de signatures spectrales d'un objet, chaque signature spectrale décrivant des propriétés de rayonnement de l'objet pour plus d'une longueur d'onde de rayonnement,
- lors d'une évaluation des différentes signatures spectrales, associer une cote d'évaluation à des valeurs des propriétés de rayonnement ou à des valeurs d'une grandeur déduite de ces dernières à chaque fois en employant des fonctions de probabilité (fonctions floues),
- définir par l'évaluation les cotes d'évaluation des propriétés de rayonnement de l'objet et
- déterminer en employant les cotes d'évaluation définies si l'objet fait partie d'un type d'objet correspondant aux fonctions floues (identification et/ou classification).

11. Dispositif selon la revendication 10, **caractérisé en ce que** le processeur comporte au moins un module (3) de reconstruction multitemporelle des données (MDR), les données de détection à distance (1) pouvant être reconstruites de manière temporelle et spatiale par le module (3).

12. Dispositif selon la revendication 10 ou 11, **caractérisé en ce que** des paramètres d'identification sont définis au moins en fonction de signatures spectrales (11 - 17) et d'une façon temporelle d'utilisation du sol.

13. Dispositif selon la revendication 10, **caractérisé en ce que** le processeur comporte un module (5) de détermination de la précision de classification (EKG) et que des paramètres d'identification peuvent être reclassifiés de manière itérative par le module (5), au moins la dépendance temporelle des caractéristiques d'utilisation du sol pouvant être reclassifiée.

14. Dispositif selon l'une des revendications 10 ou 11, **caractérisé en ce qu'**une évolution saisonnière est documentée dans une série chronologique de données et que des caractéristiques d'utilisation du sol peuvent être adaptées à l'évolution saisonnière détectée.

15. Dispositif selon l'une des revendications 10 à 12, **caractérisé en ce que** des variations, dues aux saisons, des caractéristiques d'utilisation du sol peuvent être pronostiquées.

16. Dispositif selon l'une des revendications 10 à 15, **caractérisé en ce que** des paramètres d'identification sont définis en tant que fonctions floues à n dimensions.
